(19) Europäisches Patentamt
European Patent Office
Office européen des brevets

(11) **EP 1 554 541 B1**

(12) **FASCICULE DE BREVET EUROPEEN**

(45) Date de publication et mention
de la délivrance du brevet:
**13.05.2009 Bulletin 2009/20**

(21) Numéro de dépôt: 03767938.8

(22) Date de dépôt: **21.10.2003**

(51) Int Cl.:
*G01C 11/00* *(2006.01)*

(86) Numéro de dépôt international:
**PCT/FR2003/050101**

(87) Numéro de publication internationale:
**WO 2004/040236 (13.05.2004 Gazette 2004/20)**

(54) **CIBLE CODEE ET PROCEDE DE PHOTOGRAMMETRIE UTILISANT DE TELLES CIBLES**

KODIERTES ZIELELEMENT UND EIN PHOTOGRAMMETRIE-VERFAHREN DAS VON SOLCHEN ELEMENTEN GEBRAUCH MACHT

CODED TARGET AND PHOTOGRAMMETRY METHOD USING SUCH TARGETS

(84) Etats contractants désignés:
**AT BE BG CH CY CZ DE DK EE ES FI FR GB GR HU IE IT LI LU MC NL PT RO SE SI SK TR**

(30) Priorité: **24.10.2002 FR 0213303**

(43) Date de publication de la demande:
**20.07.2005 Bulletin 2005/29**

(73) Titulaire: **COMMISSARIAT A L'ENERGIE ATOMIQUE**
**75015 Paris (FR)**

(72) Inventeurs:
• **GASPARD, François**
**F-91940 LES ULIS (FR)**
• **NAUDET, Sylvie**
**F-91120 PALAISEAU (FR)**
• **NOIRFALISE, Eric**
**F-38000 GRENOBLE (FR)**
• **SAYD, Patrick**
**F-91140 VILLEBON S/YVETTE (FR)**

(74) Mandataire: **Poulin, Gérard**
**Société BREVATOME**
**3, rue du Docteur Lancereaux**
**75008 Paris (FR)**

(56) Documents cités:
**EP-A- 0 917 081**        **DE-A- 4 205 406**
**DE-A- 19 733 466**      **DE-C- 19 632 058**

**Description**

**DOMAINE TECHNIQUE**

La présente invention concerne des cibles codées utilisées en photogrammétrie et un procédé de photogrammétrie utilisant de telles cibles codées spécifiques.

**ETAT DE LA TECHNIQUE ANTERIEURE**

Le domaine technique de l'invention est celui de la photogrammétrie et concerne donc la détermination de la dimension et la place des objets d'une scène au moyen de mesures faites sur des photographies de ces objets sur lesquels sont disposées des cibles codées.

De nombreuses applications de photogrammétrie passent par l'utilisation de cibles qui, placées dans la scène observée, permettent de mesurer avec une grande précision la position d'un point dans les différentes vues disponibles. Afin d'obtenir un degré d'automatisation plus important, certaines cibles, dites cibles codées, peuvent contenir une information permettant de les identifier de manière unique.

Un premier document, référencé [1] en fin de description, donne des exemples de cibles codées développées pour permettre des mesures en trois dimensions. Ces cibles sont circulaires ou non et comportent des caractéristiques favorables pour la capture et le traitement d'une image : par exemple un cercle central et des points de codage.

Un second document, référencé [2], donne lui aussi des exemples de cibles codées.

Un troisième document, référencé [3], décrit des cibles codées comprenant des cercles concentriques, le cercle interne étant noir, le cercle externe étant blanc avec un pourtour noir. Le codage binaire d'une cible consiste en de petits cercles noirs situés entre le cercle interne et le cercle externe.

Un quatrième document, référencé [4], décrit une méthode permettant de localiser une caméra montée sur un robot à partir d'une cible composée de deux cercles se projetant en ellipses dans l'image. Cette méthode repose explicitement sur une connaissance des diamètres des cercles ainsi que sur les paramètres dits internes des caméras (cas calibré). Le code associé aux cibles est lié au rapport de taille entre les deux cercles.

Un cinquième document, référencé [5], décrit très précisément toutes les applications possibles en photogrammétrie de cibles codées sans toutefois préciser une méthode d'identification de ces cibles.

Un sixième document, référencé [6], propose un procédé pour identifier des objets avec des cibles codées. Ce procédé est conçu pour maximiser le nombre de codes différents. Cela implique de contrôler les conditions d'acquisition, i.e. la position entre la cible et la caméra.

La détection automatique obtenue dans ces documents de l'art connu permet de connaître précisément la position d'un point d'une scène dans une image ou de suivre cette position au cours d'une séquence d'image et de recaler les différentes images entres elles.

Devant l'importance de disposer d'un outil permettant de mesurer la position d'un point d'une scène dans une image et malgré les progrès actuels en vision par ordinateur, l'invention a pour objet de proposer un système de cibles codées comportant à la fois une spécification des cibles et une partie logicielle permettant la reconnaissance et le positionnement précis des cibles dans une image.

**EXPOSÉ DE L'INVENTION**

La présente invention propose donc une cible codée utilisée en photogrammétrie, qui est circulaire et comporte au moins deux anneaux de codage concentriques d'au moins deux secteurs angulaires égaux, disposés autour d'une zone centrale comportant un disque central de couleur homogène entouré d'un premier anneau de couleur complémentaire, lui-même entouré d'un second anneau de même couleur que le disque central. Le premier anneau de codage, qui est le plus interne, a tous ses secteurs de la même couleur sauf un qui a une couleur complémentaire.

Deux couleurs différentes ou bien deux intensités lumineuses différentes sont qualifiées de couleurs complémentaires. Le codage des cibles conformément à l'invention est basé sur un codage binaire selon ces deux couleurs complémentaires.

Avantageusement, le disque central est de couleur blanche ou noire. Le second anneau qui entoure le premier anneau entourant le disque central est plus fin que le premier anneau. Chaque secteur de chaque anneau est de couleur homogène.

Avantageusement, la cible comporte un troisième anneau de codage dont les secteurs sont de la couleur complémentaire à celle du secteur adjacent du second anneau de codage.

Dans une telle cible, la zone centrale (disque central et deux anneaux) sert à la détection rapide de la cible et à la localisation précise de son centre par un logiciel de reconnaissance. Les anneaux de codage sur chaque cible sont numérotés par ordre croissant du centre vers l'extérieur par ledit logiciel de reconnaissance.

L'ensemble des anneaux de codage a un codage spécifique invariant par rapport aux rotations de la cible.

Le fait que le premier anneau de codage a tous ses secteurs de la même couleur sauf un qui a une couleur complémentaire, permet de désigner le secteur adjacent du second anneau, entourant le précédent, comme étant le premier secteur de cet anneau. Ainsi, la numérotation des secteurs, par exemple par ordre croissant par rotation dans le sens des aiguilles d'une montre, est assurée sans ambiguïté et sans nécessiter de marque externe.

Le troisième anneau de codage a pour fonction d'assurer la robustesse aux occultations (partielles) de la cible par des objets de la scène placés entre le point de vue et la cible.

Dans le cas de deux anneaux de codage ayant chacun n secteurs, le codage selon l'invention permet de distinguer $2^{n+1}$ cibles et s'avère donc plus performant que le codage réalisé dans l'art antérieur.

La présente invention concerne également un procédé de photogrammétrie utilisant de telles cibles codées spécifiques et un logiciel de reconnaissance de ces cibles sur des images,
**caractérisé en ce qu**'il comprend les étapes suivantes :

- une étape de détection rapide de la zone centrale des cibles donnant une première localisation des cibles sur l'image,
- une étape de localisation fine des cibles prenant en compte les déformations dues à la perspective,
- une étape d'identification de la cible avec identification des anneaux de codage et de leurs secteurs, évaluation des couleurs des anneaux de codage et gestion des occultations.

Avantageusement, l'étape de détection comprend successivement :

- utilisation d'un filtre dérivateur, tel que par exemple un filtre de Sobel ou un filtre de Cany-Deriche, pour le calcul des gradients en X et en Y,
- calcul de la norme du gradient et de la direction de celui-ci,
- calcul des images d'intersection et de direction,
- extraction des cercles et des ellipses,
- filtrage par seuillage,
- étiquetage,
- filtrage par régions.

Avantageusement, l'étape d'identification comprend, pour chaque cible :

- Segmentation adaptative,
- Estimation des déformations cercle/ellipse,
- Echantillonnage régulier des couronnes,
- Extraction des listes de couleurs,
- Filtrage des listes,
- Identification de la cible,
- éventuellement Gestion des occultations.

Les cibles de l'invention peuvent avantageusement être utilisées dans le domaine de la métrologie industrielle, et dans le domaine de la vision par ordinateur.

D'un point de vue général, l'invention permet d'obtenir à la fois une grande précision dans l'extraction des cibles et une robustesse importante aux déformations liées à l'acquisition par rapport aux méthodes et aux cibles existantes qu'elles soient circulaires ou non.

Par rapport aux méthodes existantes décrites dans les documents référencés [1], [2] et [3], les cibles selon l'invention offrent une grande robustesse aux distorsions projectives que l'on rencontre dès que l'on modifie le point de vue d'une scène, le plan image de la caméra ne restant pas parallèle au plan de la cible. D'autre part, les spécifications de ces cibles codées permettent d'obtenir directement des algorithmes rapides, précis, résistants aux variations de luminosité que l'on rencontre fréquemment au sein d'une même image, et invariants à l'échelle de la cible. En effet, selon l'application visée, on peut considérer plusieurs jeux de cibles de tailles différentes sans aucune modification logicielle ou physique sur les cibles.

Par rapport au document référencé [4], l'approche de l'invention, basée sur des rapports de distance entre les différentes couronnes (pour le parcours des couronnes et non pour le code lui-même) ne fait ni appel à une connaissance explicite des diamètres des cercles ni à une connaissance des paramètres de calibration (paramètres internes) de la caméra.

Par rapport au document référencé [5], l'invention concerne un procédé d'identification et de localisation de cibles codées, qui est plus performant que les procédés brièvement décrits dans ce document : du fait du nombre de cibles codées identifiables et de la robustesse du procédé de l'invention aux conditions d'acquisition grâce à l'utilisation d'un premier anneau de codage qui sert à la fois de repérage en orientation et de codage.

Dans le document référencé [6], la cible est circulaire avec des bandes et la dernière couronne sert à repérer les différentes positions angulaires. Dans le cas de l'invention, on utilise un seul repère angulaire, permettant d'orienter la cible (premier anneau de codage) et servant également à coder la cible (un bit de codage supplémentaire). D'autre part, les différentes positions angulaires des secteurs sont, dans le cas de l'invention, retrouvées à partir des déformations perspectives de la zone centrale et non pas à partir de repères régulièrement positionnés autour de la cible comme présentés dans ce document. De plus, le repérage angulaire présenté dans ce document réduit de manière importante la place physiquement disponible sur la cible pour y faire figurer le code. Le logiciel de décodage utilisé diffère donc grandement du procédé de l'invention (présence de tableaux pour les positions angulaires, ...)

## BRÈVE DESCRIPTION DES DESSINS

La figure 1 illustre une cible codée selon l'invention avant et après projection de la cible dans l'image.

La figure 2 illustre la non invariance du code d'une cible circulaire à quatre secteurs homogènes par rotation.

La figure 3 illustre une cible codée, selon l'invention, à quatre secteurs avec repérage du premier secteur.

La figure 4 illustre le procédé de reconnaissance des cibles codées selon l'invention.

La figure 5 illustre la discrétisation de l'espace des directions dans le cas d'un cercle.

La figure 6 illustre la discrétisation de l'espace des directions dans le cas de l'ellipse.

La figure 7 illustre le procédé de détection selon l'invention.

La figure 8 illustre un repère lié à une ellipse.

La figure 9 illustre les paramètres estimés de l'ellipse.

La figure 10 illustre l'utilisation d'un invariant projectif pour échantillonner les points des différents anneaux

Les figures 11A et 11B illustrent une sélection de points pour un échantillonnage régulier.

La figure 12 illustre la représentation des points caractéristiques de l'ellipse.

La figure 13 illustre la recherche des coordonnées d'un point M à l'aide de ses composantes.

Les figures 14A et 14B illustrent une cible donnée et un exemple d'histogramme bimodal obtenu à partir de celle-ci.

La figure 15 illustre l'ajout d'un troisième anneau de codage pour la gestion des occultations.

La figure 16 illustre un exemple de cible codée permettant de gérer les problèmes d'occultation.

La figure 17 illustre le procédé d'identification selon l'invention.

## EXPOSÉ DÉTAILLÉ DE MODES DE RÉALISATION PARTICULIERS

Afin d'obtenir une grande robustesse aux distorsions projectives et une détection rapide, les cibles selon l'invention sont circulaires et comportent plusieurs anneaux de codage 10 et 11, placés autour d'une zone centrale 12.

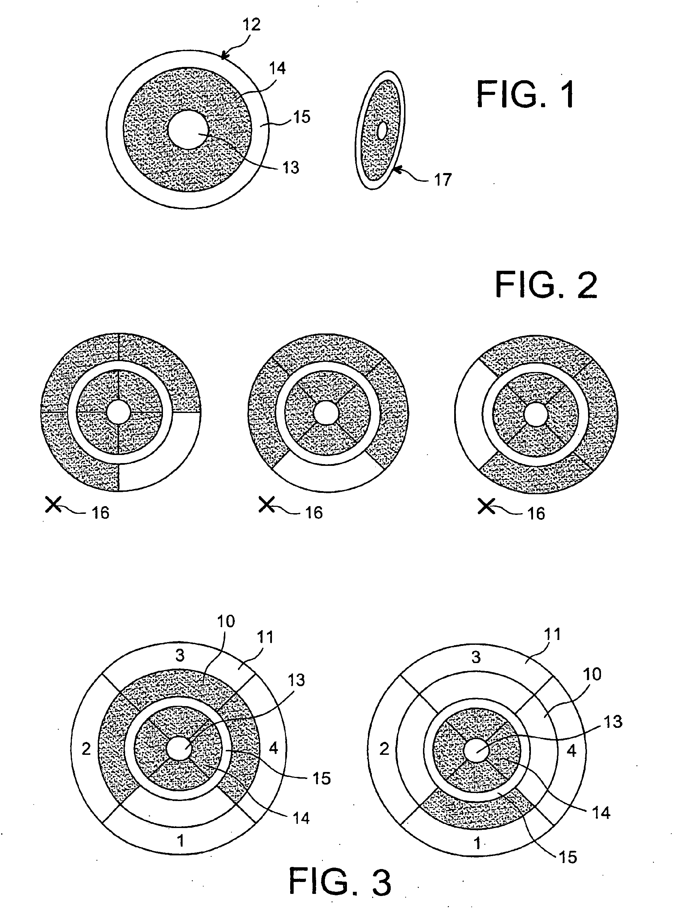

Cette zone centrale 12 est composée d'un disque blanc 13 placé à l'intérieur d'un anneau noir 14 qui est, lui-même, entouré d'un anneau blanc 15 comme représenté sur la figure 1. Les étapes de détection et de localisation précise de la cible s'effectuent sur cette zone centrale 13. Il est également possible d'utiliser un motif dont les couleurs sont inversées : un disque noir 13 à l'intérieur d'un anneau blanc 14, entouré d'un anneau noir 15.

Chaque anneau de codage est décomposé en secteurs de taille identique et de couleur homogène. Le codage est effectué sur deux couleurs (noir et blanc, codage binaire) pour permettre un fort contraste et assurer la robustesse aux variations d'éclairage qui peuvent être importantes. Etant donné la couleur de chaque zone homogène, il existe donc $2^n$ cibles différentes. Si l'on considérait une cible contenant un anneau de codage et n secteurs, elle ne serait pas utilisable car le codage ainsi réalisé ne serait pas invariant aux rotations de la cible. En effet, il convient de repérer le premier secteur de la cible pour trouver le code correspondant à la cible. Une cible peut conduire à n codes différents selon le secteur de départ de l'algorithme de décodage, comme illustré sur la figure 2, où la croix noire 16 représente le point de départ de la lecture du code.

Contrairement aux cibles présentées dans le document référencé [3], où chaque cible est identifiée par n codes, et pour conserver un nombre réduit de secteurs de codage, une cible selon l'invention comporte un premier anneau de codage 10 qui sert à trouver le premier secteur de la cible. En effet, tous les secteurs de cet anneau de codage 10 ont la même couleur sauf un. Ce secteur permet d'identifier le premier secteur de l'anneau de codage 10 et par suite le premier secteur du deuxième anneau de codage 11 et par conséquent permet de déterminer l'orientation de la cible.

On obtient deux types de cibles à partir de la couleur de ce secteur et donc un bit de codage supplémentaire par rapport à une cible à n secteurs et un seul anneau de codage. Il est ainsi possible, avec n secteurs différents et deux anneaux de codage, d'identifier visuellement et de manière unique $2^{n+1}$ cibles différentes, comme représenté pour quatre secteurs sur la figure 3.

L'utilisation des cibles codées pour une application de vision trois dimensions (3D) impose également une contrainte de robustesse aux occultations. En effet, suivant le point de vue, un objet peut masquer une partie d'une cible et conduire à une mauvaise identification de la cible. L'ajout d'un troisième anneau de codage, copie en couleurs inverses (le blanc devient noir et le noir devient blanc) du deuxième anneau permet de détecter une telle situation.

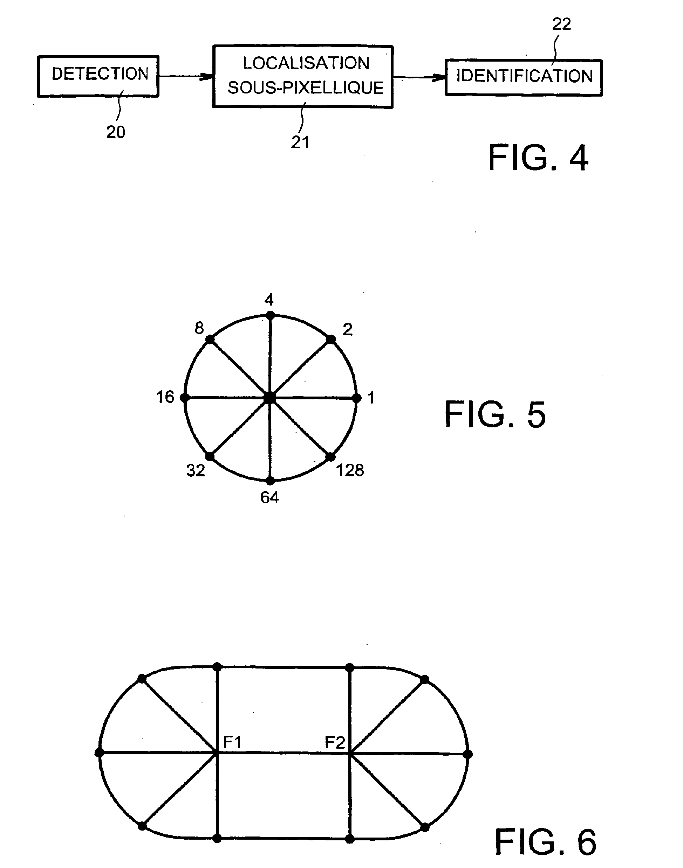

Le procédé de reconnaissance de telles cibles codées se décompose en trois étapes successives illustrées sur la figure 4, à savoir :

- détection (étape 20),
- localisation sous-pixellique (étape 21),
- identification (étape 22).

La première étape de détection permet de retrouver rapidement la zone centrale de chacune des cibles codées dans l'image. La position des cibles dans l'image est ensuite affinée dans une étape de localisation fine, permettant également de considérer les distorsions liées à la projection dans l'image. Enfin, la dernière étape permet de retrouver l'identification de la cible, à partir des paramètres de l'ellipse, liés à la projection 17 de la cible dans l'image (voir figure 1).

## Etape de détection de cibles

Le but de cette étape de détection 20 est de détecter la présence de la zone centrale 12 d'une cible dans l'image. Cette zone, constituée d'un disque blanc entouré d'un disque noir (ou inversement) va être déformée, par la projection, en une ellipse 17 dans l'image, comme illustré sur la figure 1.

Le procédé de l'invention permettant la détection des ellipses dans l'image est basé sur un algorithme par accumulation adapté au cas des ellipses.

On calcule tout d'abord le gradient (module et direction) de la luminance de l'image, ou de l'image obtenue par traitement des couleurs de l'image originale, par une technique classique de traitement d'image (filtrage de Deriche, filtre de Sobel, ...). On crée alors deux images, de taille identique à l'image en entrée : une image de direction et une image d'intersection, initialisées à zéro.

En chaque point de l'image de module supérieur à un seuil (présence d'un contour), on parcourt l'image le long d'une droite perpendiculaire au contour (direction du gradient donnée par le filtre de détection de contour) sur une distance paramétrable.

La valeur de chaque pixel de l'image d'intersection correspondant à un pixel de l'image parcouru par ce lancer de rayon est incrémenté d'une unité, créant ainsi une image d'accumulation.

Parallèlement à cette image d'intersection, on génère une image, appelée image de direction, qui comptabilise pour chaque pixel les différentes directions rencontrées en parcourant ce pixel. Pour ceci on discrétise l'espace des orientations du gradient en 8 secteurs comme le montre la figure 5. Chaque orientation du gradient est alors identifiée par le secteur auquel elle appartient. Lors du lancer de rayon, on recense en chaque pixel les différentes orientations rencontrées parmi les huit possibles.

Le codage employé permet d'utiliser un codage binaire sur 8 bits pour connaître les différentes directions rencontrées pour un pixel, chaque direction correspondant à un bit affecté dès que la direction est rencontrée.

Si on considère le cas d'un cercle, comme illustré sur la figure 5, en partant des contours du cercle, perpendiculairement à la direction du contour, les différents rayons parcourus convergent vers le centre du cercle, créant ainsi un point d'accumulation (forte valeur de l'image d'intersection). D'autre part, le point correspondant au centre du cercle de l'image d'intersection contient les 8 directions possibles, permettant ainsi de détecter la présence du cercle dans l'image. De nombreux algorithmes de détection de régions circulaires sont basés sur des algorithmes similaires.

Dans le cas d'une ellipse (projection d'un cercle dans une image), deux points d'accumulation apparaissent au niveau des deux foyers F1 et F2 de l'ellipse comme illustré sur la figure 6.

La détection des cibles est alors possible en détectant les points présentant huit directions (cas du cercle parfait) ainsi que les points présentant cinq directions consécutives et une direction perpendiculaire (cas des ellipses).

Lorsque l'on utilise un tel algorithme sur une scène contenant plusieurs cibles codées, ces cibles sont détectées de manière rapide. Mais un grand nombre de faux candidats subsiste. Deux filtres sont successivement appliqués pour faire décroître le nombre de faux candidats :

- Par seuillage :
  Le centre de la cible étant blanc (respectivement noir), tous les points détectés de niveau de gris trop faible (respectivement trop élevé) sont supprimés. Le seuil est fixé à un niveau bas pour éviter une grande sensibilité des résultats en fonction de ce seuil.
- Par étiquetage de la cible :
  Autour de chaque point détecté, un étiquetage permettant de regrouper tous les points, dont l'intensité lumineuse est proche, est réalisé. Pour chacune des zones créées, on conserve uniquement le centre de gravité correspondant au centre du cercle. Lorsque les déformations perspectives ne sont pas négligeables, il convient de calculer ensuite la position du centre de la cible dans l'image en utilisant les déformations perspectives : c'est le but de l'étape de localisation des cibles 21.

Le procédé de l'invention permet donc une détection des centres des cibles dans l'image, à faible coût de calcul. Toutes les cibles sont détectées, mais quelques faux appariements subsistent et doivent être traités ultérieurement.

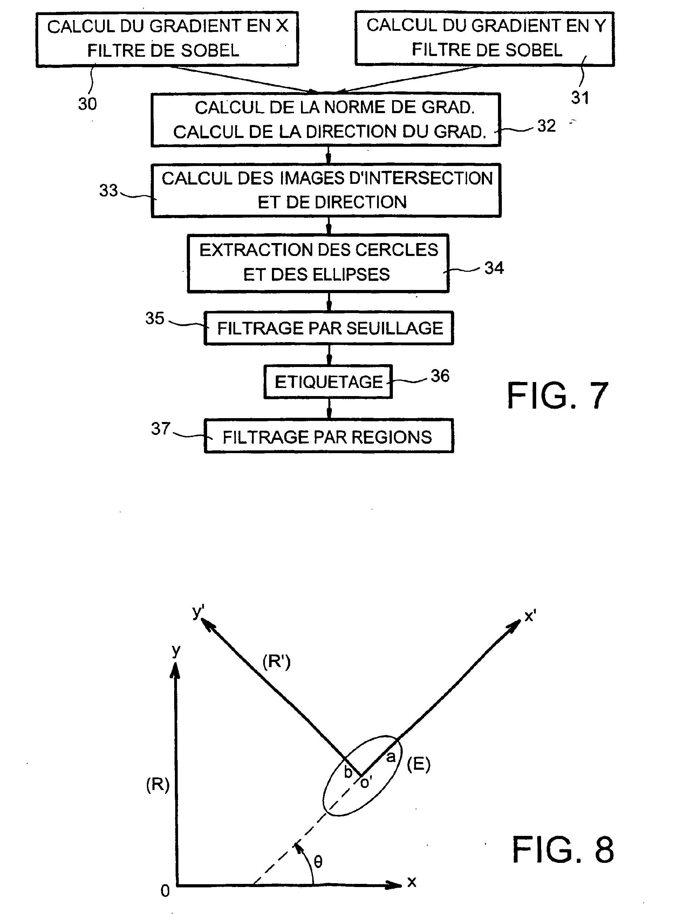

La figure 7 résume l'enchaînement des différentes étapes du procédé de détection.

On a ainsi successivement :

- utilisation d'un filtre dérivateur, tel que par exemple un filtre de Sobel ou un filtre de Carry-Deriche, pour le calcul des gradients en X et en Y (étapes 30 et 31),
- calcul de la norme du gradient et de la direction de celui-ci (étape 32),
- calcul des images d'intersection et de direction (étape 33),
- extraction des cercles et des ellipses (étape 34),
- filtrage par seuillage (étape 35),
- étiquetage (étape 36),
- filtrage par régions (étape 37).

En sortie de cet algorithme, on dispose d'une série de points correspondant aux zones centrales des cibles mais pouvant toutefois contenir quelques faux candidats.

**Etape de localisation des cibles**

Le but de cette étape 21 est d'estimer précisément la position du centre des cibles dans l'image ainsi que les distorsions liées à la projection perspective.

Deux méthodes de l'art connu permettent d'estimer les déformations liées à la projection, soit par détection sous pixellique, soit par estimation directe des paramètres de l'ellipse comme décrit dans le document référencé [2].

Dans le procédé, on cherche l'équation d'une ellipse dans un repère $(0, \vec{i}, \vec{j})$ quelconque connaissant son centre $(m_x, m_y)$, la longueur de ses axes a et b ainsi que son orientation donnée par l'angle $\theta$ entre l'axe des abscisses et son grand axe.

Pour déterminer cette équation, on se place dans le repère $(0', \vec{i}, \vec{j})$ tel que $0' = (m_x, m_y)$ et $\vec{i}, \vec{j}$ respectivement parallèles au grand axe et au petit axe de l'ellipse, comme le montre la figure 8.

Dans le repère $(0', \vec{i}, \vec{j})$, l'équation de l'ellipse (E) est la suivante :

$$\begin{cases} x' = a \times \cos(u) \\ y' = b \times \sin(u) \end{cases} d'où\ l'équation\ \frac{x'^2}{a^2} + \frac{y'^2}{b^2} = 1 \ .$$

Par ailleurs :

$$\begin{pmatrix} x' \\ y' \end{pmatrix} = R\theta \left( \begin{pmatrix} x \\ y \end{pmatrix} - Too' \right) = \begin{pmatrix} \cos(\theta) & \sin(\theta) \\ -\sin(\theta) & \cos(\theta) \end{pmatrix} \begin{pmatrix} x - m_x \\ y - m_y \end{pmatrix} = \begin{pmatrix} \cos(\theta)(x - m_x) + \sin(\theta)(y - m_y) \\ -\sin(\theta)(x - m_x) + \cos(\theta)(y - m_y) \end{pmatrix} .$$

On a donc, dans le repère R, l'équation suivante pour l'ellipse (E) :

$$\frac{\left(\cos(\theta)(x - m_x) + \sin(\theta)(y - m_y)\right)^2}{a^2} + \frac{\left(-\sin(\theta)(x - m_x) + \cos(\theta)(y - m_y)\right)^2}{b^2} = 1 \qquad (1)$$

en posant E = tan($\theta$) et en remarquant que $\cos^2(\theta) = \dfrac{1}{1+E^2}$, on obtient :

$$\frac{\left((x - m_x) + (y - m_y)E\right)^2}{a^2(1 + E^2)} + \frac{\left((y - m_y) - (x - m_x E)\right)^2}{b^2(1 + E^2)} = 1 \qquad (2)$$

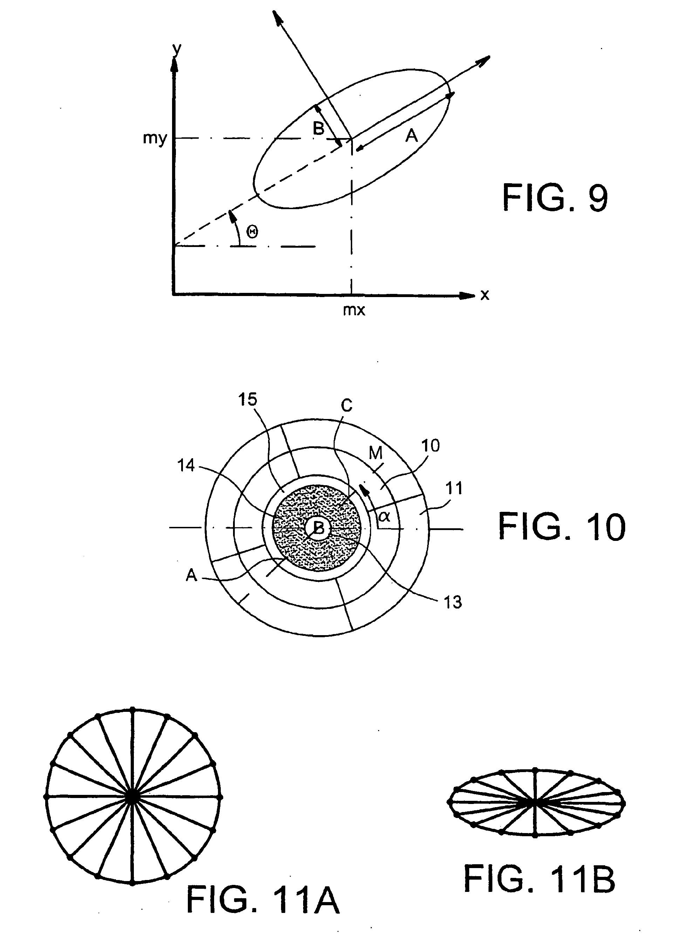

On peut alors représenter les paramètres estimés précédemment par la figure 9.

A partir du centre de gravité de la cible codée, donné par l'étape de détection 20, on peut rechercher par échantillonnage le long de droites des points appartenant au premier anneau et, à partir de ces points, trouver les paramètres de l'ellipse ainsi que la position précise (sous-pixellique) du centre de la cible dans l'image. Lorsque la recherche des points du premier anneau s'avère infructueuse, la cible est rejetée (fausse détection).

A l'issue de cette étape 21, on dispose des paramètres de chacune des ellipses détectées.

**Etape d'identification des cibles**

Cette étape 22 est elle-même formée de plusieurs étapes :

• Echantillonnage des points des anneaux

Sur une droite donnée passant par le centre de la cible, la détection des extrémités du premier anneau 14 à partir du centre de la cible, permet de retrouver les points des différents anneaux de codage par le calcul d'un birapport, invariant par projection (c'est-à-dire que ce rapport reste constant dans toute image de la cible quelque que soit le point de vue).

La figure 10 représente les éléments nécessaires à la recherche d'un point M dans un anneau de codage, à partir du centre de la cible, le point B, et des extrémités du premier anneau 14 sur le rayon, les points A et C.

La relation suivante permet alors de calculer les coordonnées du point M :

$$\Pi_{ABCM} = \frac{\overline{MA}.\overline{BC}}{\overline{BA}.\overline{MC}}$$

où $\Pi_{ABCM}$ est un birapport, invariant par projection et indépendant du choix de la droite passant par le centre de la cible. Ce birapport ne dépend que du rapport entre le rayon du premier anneau 14 et le rayon de l'anneau de codage portant M (connu par construction de la cible).

L'identification est alors réalisée en échantillonnant l'espace des orientations des droites (représenté par l'angle $\alpha$ sur la figure 10) afin de couvrir l'ensemble de l'anneau de codage.

Le paragraphe suivant montre comment prendre en compte les déformations elliptiques afin d'effectuer un échantillonnage régulier autour du cercle (voir figure 11).

• Echantillonnage régulier

La déformation elliptique due à la projection perspective de la cible dans le plan de projection est prise en compte par l'utilisation d'un birapport lors de l'échantillonnage des points. Ainsi, le problème ne consiste pas ici à retrouver les points de contour de la tache mais plutôt à effectuer un échantillonnage angulaire adapté aux déformations perspectives.

On dispose de l'orientation, des dimensions et du centre de l'ellipse. Il est alors possible de calculer les paramètres (à un facteur d'échelle près) de la déformation homographique qui a transformé la zone centrale de la cible en une ellipse. Ceci permet d'estimer la position de chaque point du disque après projection. Pour échantillonner régulièrement les anneaux de codage de la cible, il suffit alors de sélectionner des points espacés régulièrement sur le disque initial puis de les projeter dans l'image.

La figure 11A illustre un modèle de référence. La figure 11B illustre une ellipse obtenue après projection perspective.

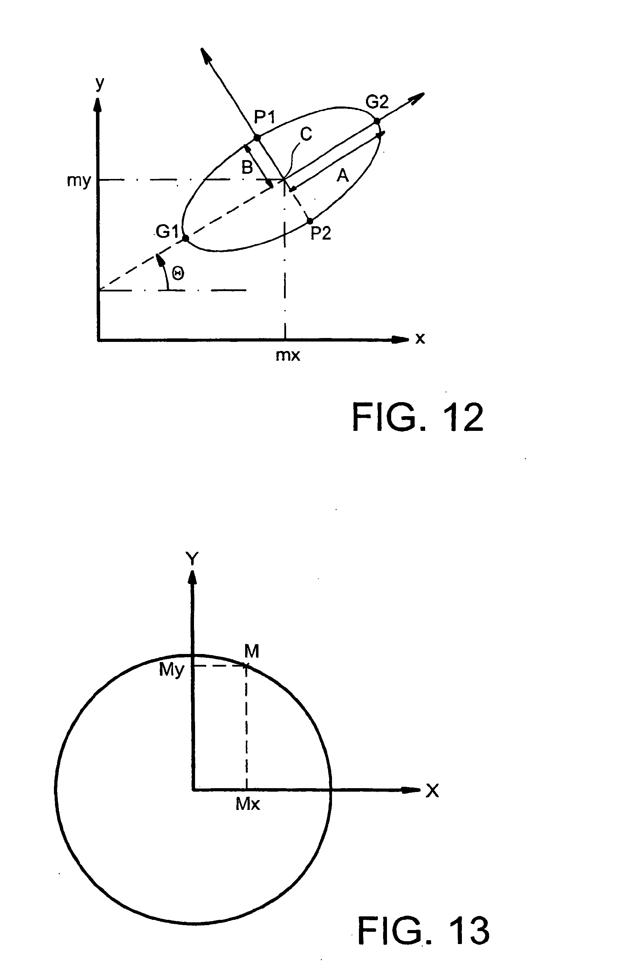

Pour projeter les points du modèle de référence sur l'ellipse, on calcule dans un premier temps les coordonnées des sommets de l'ellipse. On dispose alors des coordonnées de cinq points caractéristiques de l'ellipse P1, P2, G1, G2 et C comme illustré sur la figure 12.

On peut alors utiliser des couples de birapports (invariant projectif) pour calculer les coordonnées des points échantillons. Il est en effet possible d'adapter la méthode présentée dans le cas mono-dimensionnel (bi-rapport sur des points alignés) pour traiter le cas bi-dimensionnel. Cela revient au calcul d'une homographie à un facteur de rotation près. Mais, dans ce cas, le calcul des deux bi-rapports est plus efficace (utilisation directe des paramètres de l'ellipse).

Plus précisément, pour retrouver un point M, on calcule un birapport pour sa projection $M_x$ sur l'axe des abscisses et un birapport pour sa projection $M_y$ sur l'axe des ordonnées, comme illustré sur la figure 13.

On peut alors utiliser la méthode basée sur les birapports pour retrouver les projections des points $M_x$ et $M_y$ dans l'image. Connaissant l'orientation de l'ellipse et son centre, on peut alors utiliser le repère local attaché à l'ellipse pour remonter aux coordonnées du point M.

Cette méthode permet donc bien d'échantillonner régulièrement les contours d'une ellipse ayant la même forme que le disque central de la cible, à un facteur d'échelle près et donc de retrouver les différents anneaux de codage.

• Segmentation adaptative

Selon l'éclairage, les intensités lumineuses ou "niveaux de gris" correspondants aux zones noires et aux zones blanches de la cible peuvent varier de manière importante.

Pour chacune des cibles détectées à ce niveau, un algorithme de segmentation adaptative permet de connaître le niveau de gris correspondant aux zones noires et celui correspondant aux zones blanches.

On utilise un procédé de l'art connu, basé sur l'analyse de l'histogramme de la zone considérée. L'histogramme représente le nombre de pixels ayant un niveau de gris donné. Le procédé recherche deux modes M1 et M2 (maxima) sur cet histogramme ainsi que le seuil optimal séparant les deux classes de pixels.

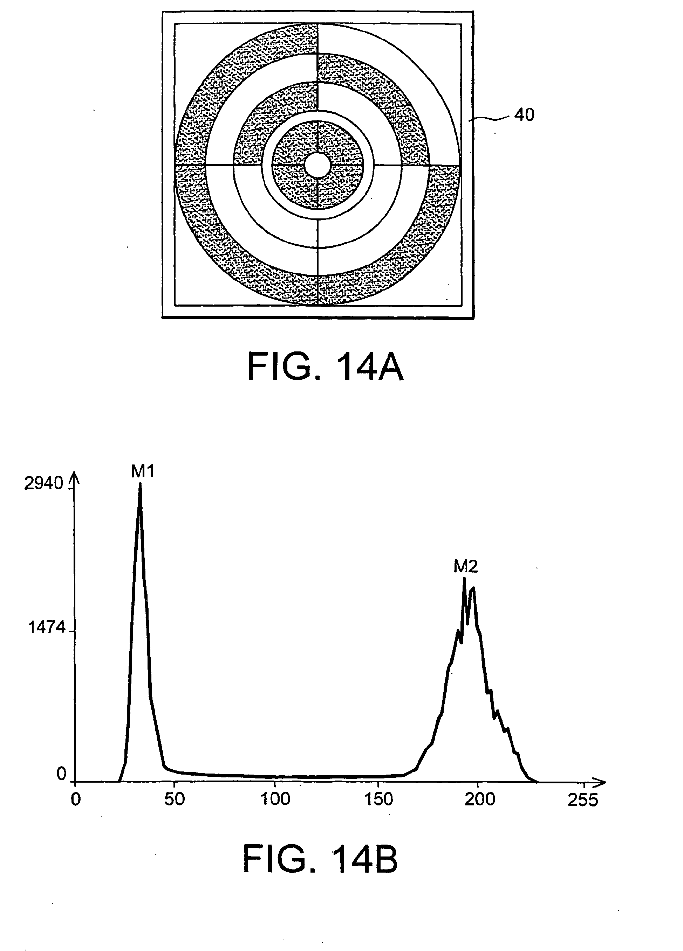

La figure 14 illustre un cas permettant d'obtenir un histogramme bimodal. On a calculé l'histogramme (figure 14B) de la zone contenue dans le carré 40 (figure 14A).

Le procédé segmente les niveaux de gris de l'histogramme en deux classes en faisant varier le seuil séparant ces classes. Ce seuil est optimisé itérativement jusqu'à l'obtention d'un seuil défini comme étant le seuil optimal.

On dispose donc d'une méthode permettant d'estimer les niveaux de gris, c'est-à-dire les intensités lumineuses, des pixels noirs et blancs composant une cible codée.

• Algorithme d'identification

L'utilisation des algorithmes précédents permet d'obtenir une liste de points régulièrement échantillonnés dans chacun des anneaux de codage. L'algorithme de segmentation adaptative permet de connaître la couleur de chacun de ces points, directement à partir de l'intensité lumineuse.

On obtient ainsi des listes de "couleurs" correspondant aux intensités des points régulièrement échantillonnés le long des anneaux de codage.

Pour assurer une certaine robustesse au bruit, on utilise un filtrage médian sur les listes de "couleurs" (l'intensité d'un point est déterminée à partir de l'intensité de n de ses voisins).

On recherche alors dans la liste de "couleurs" correspondant au premier anneau de codage les positions des deux transitions noir/blanc de cet anneau. Si il y a plus ou moins de deux transitions dans cet anneau, la cible est considérée comme invalide.

Dans le cas contraire, on calcule la position du centre du secteur de "couleur" minoritaire dans la liste de points échantillonnés. Ceci donne une bonne approximation de l'orientation de la cible. Il est alors possible, grâce à cette position, de calculer la "couleur" du secteur du deuxième anneau de codage adjacent au secteur minoritaire du premier (secteur 1 de la figure 3). On avance ensuite successivement du quart de la longueur de la liste pour obtenir la "couleur" des trois autres secteurs (secteurs 2, 3 et 4 de la figure 3). On obtient ainsi l'identification de chaque cible codée.

• Gestion des occultations

On est donc en mesure de détecter et d'identifier les cibles codées dans des images. Il reste à régler le problème des occultations des cibles codées. Il est en effet fréquent qu'une cible soit partiellement cachée par un objet de la scène lorsque l'on observe cette scène sous plusieurs points de vue très différents. Il faut alors être capable de détecter cette occultation pour ne pas commettre d'erreur d'identification.

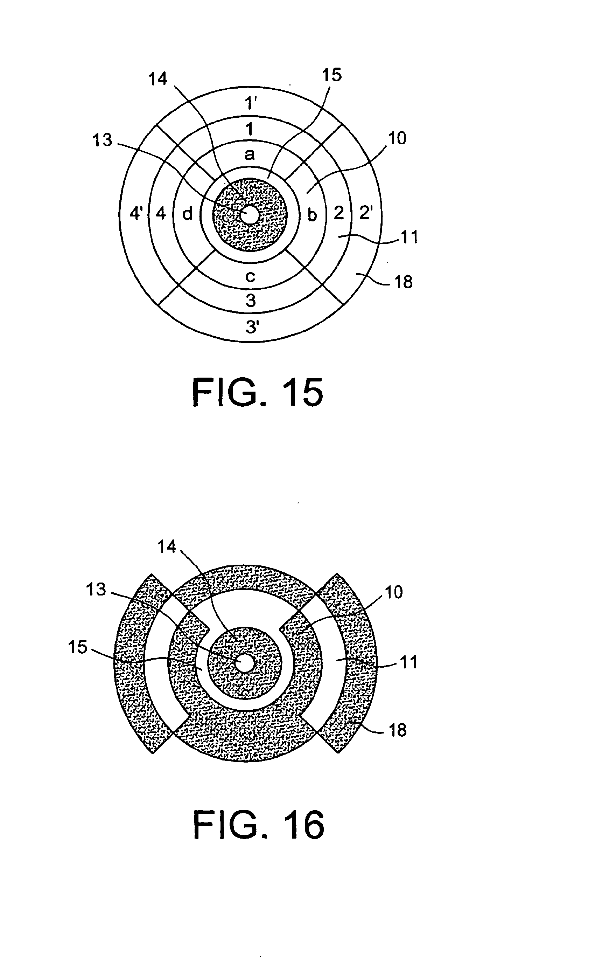

On a choisi d'ajouter un troisième anneau de codage 18 aux cibles codées utilisées précédemment, comme illustré sur la figure 15.

On impose pour le codage de telles cibles les mêmes contraintes sur les secteurs des deux anneaux de codage intérieurs 10 et 11. On impose de plus que les secteurs 1', 2', 3' et 4' du troisième anneau de codage 18 soient

## EP 1 554 541 B1

respectivement de couleur inverse aux secteurs 1, 2, 3 et 4 du second anneau de codage 11.

Le non-respect de cette contrainte permet alors de repérer la plupart des cibles occultées par des objets de la scène. La figure 16 présente un exemple d'une telle cible codée.

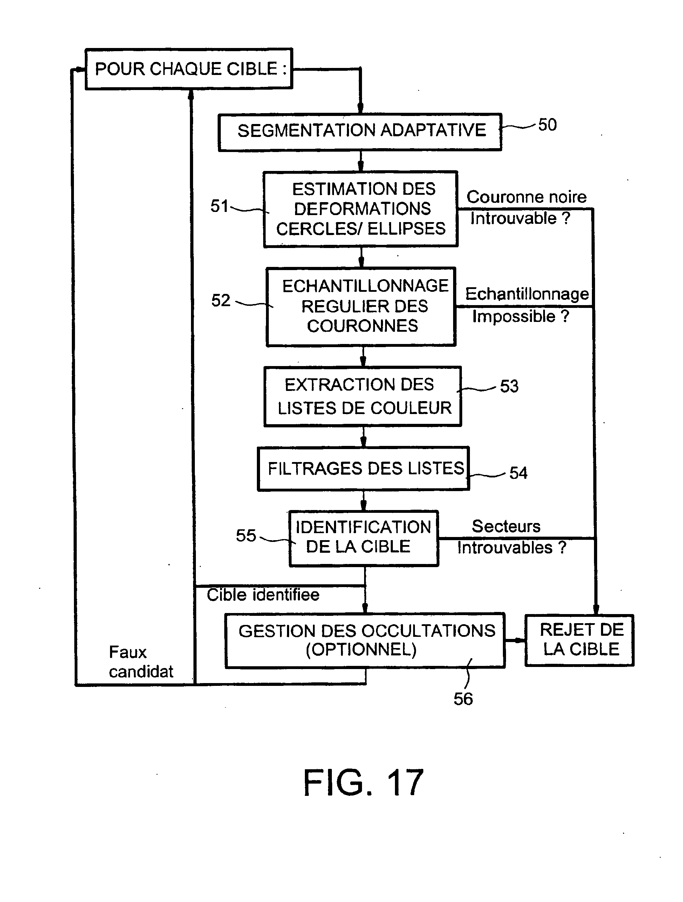

La figure 17 illustre les différentes étapes de l'étape d'identification.

Pour chaque cible, on a ainsi :

- Segmentation adaptative (étape 50),
- Estimation des déformations cercle/ellipse (étape 51),
- Echantillonnage régulier des couronnes (étape 52),
- Extraction des listes de couleurs (étape 53),
- Filtrage des listes (étape 54),
- Identification de la cible (étape 55),
- éventuellement Gestion des occultations (étape 56).

Le procédé de l'invention permet d'obtenir des résultats robustes aux distorsions projectives, indépendant de l'échelle des cibles utilisées, robustes aux occultations, et robustes aux changements d'éclairage.

**REFERENCES**

[1] Ahn S.J. et Schultes M. "A new circular coded target for the automation of photogrammetric 3D-surface measurements" (Optical 3-D Measurement Techniques IV : Applications in architecture, quality control, robotics, navigation, medical imaging and animation. Heidelberg : Wichmann, 1997, pages 225-234).

[2] Ganci Giuseppe et Handley Harry. "Automation in videogrammetry" (International Archives of Photogrammetry and Remote Sensing, Hakodate 32(5), pages 53-58, 1998).

[3] Knyaz Vladimir A. et Sibiyakov Alexander "Non Contact 3D Model Reconstruction Using Coded Target", (8th International Conference on Computer Graphics and Visualization, Moscou, 1998).

[4] US 5,911,767

[5] WO 97/31336

[6] US 5,554,841

**Revendications**

**1.** Cible codée utilisée en photogrammétrie, qui est circulaire et comporte au moins deux anneaux de codage (10, 11) concentriques d'au moins deux secteurs angulaires égaux, disposés autour d'une zone centrale (12) comportant un disque central (13) de couleur homogène entouré d'un anneau de couleur complémentaire (14), lui-même entouré d'un anneau (15) de même couleur que le disque central (13), **caractérisée en ce que** le premier anneau de codage (10), qui est le plus interne, a tous ses secteurs de la même couleur sauf un qui a une couleur complémentaire.

**2.** Cible selon la revendication 1, dans laquelle le disque central (13) est de couleur blanche ou noire.

**3.** Cible selon la revendication 1, dans laquelle le second anneau (15), qui entoure le premier anneau (14) entourant le disque central (13), est plus fin que le premier anneau (14).

**4.** Cible selon la revendication 1, dans laquelle chaque secteur de chaque anneau est de couleur homogène.

**5.** Cible selon la revendication 1 qui comporte un troisième anneau de codage (18) dont les secteurs sont de la couleur complémentaire à celle du secteur adjacent du second anneau de codage (11).

**6.** Procédé de photogrammétrie utilisant des cibles codées spécifiques selon l'une quelconque des revendications précédentes, et un logiciel de reconnaissance de ces cibles sur des images, **caractérisé en ce qu'**il comprend les étapes suivantes :

- une étape (étape 20) de détection de la zone centrale des cibles donnant une première localisation des cibles sur l'image,
- une étape (étape 21) de localisation fine des cibles prenant en compte les déformations dues à la perspective,
- une étape (étape 22) d'identification de la cible avec identification des anneaux de codage et de leurs secteurs, évaluation des couleurs des anneaux de codage et gestion des occultations.

7. Procédé selon la revendication 6, dans lequel l'étape de détection (étape 20) comprend successivement :

- utilisation d'un filtre dérivateur, tel que par exemple un filtre de Sobel ou de Carry-Deriche, pour le calcul des gradients en X et en Y (étapes 30 et 31),
- calcul de la norme du gradient et de la direction de celui-ci (étape 32),
- calcul des images d'intersection et de direction (étape 33),
- extraction des cercles et des ellipses (étape 34),
- filtrage par seuillage (étape 35),
- étiquetage (étape 36),
- filtrage par régions (étape 37).

8. Procédé selon la revendication 6, dans lequel l'étape d'identification (étape 22) comprend, pour chaque cible :

- Segmentation adaptative (étape 50),
- Estimation des déformation cercle/ellipse (étape 51),
- Echantillonnage régulier des couronnes (étape 52),
- Extraction des listes de couleurs (étape 53),
- Filtrage des listes (étape 54),
- Identification de la cible (étape 55).

9. Procédé selon la revendication 8, dans lequel l'étape d'identification (étape 22) comprend en outre une Gestion des occultations (étape 56).

10. Utilisation de cibles selon l'une quelconque des revendications 1 à 5 dans le domaine de la métrologie industrielle.

11. Utilisation de cibles selon l'une quelconque des revendications 1 à 5 dans le domaine de la vision par ordinateur.

**Claims**

1. Coded target used in photogrammetry, the target being circular and comprising at least two concentric coding rings (10, 11) with at least two equal angular sectors, arranged around a central area (12) comprising a central disk (13) with a uniform colour surrounded by a ring with a complementary colour (14), itself surrounded by a ring (15) the same colour as the central disk (13), **characterized in that** all sectors in the first coding ring (10) which is the innermost ring, are the same colour except for one that is a complementary colour.

2. Target according to claim 1, in which the central disk (13) is white or black.

3. Target according to claim 1, in which the second ring (15) that surrounds the first ring (14) surrounding the central disk (13), is thinner than the first ring (14).

4. Target according to claim 1, in which each sector in each ring is the same colour.

5. Target according to claim 1 comprising a third coding ring (18), in which the colour of the sectors is complementary to the colour of the sector adjacent to the second coding ring (11).

6. Photogrammetry process using specific coded targets according to any one of the above claims, and software for recognition of these targets on images, which comprises the following steps:

- a step (step 20) for detection of the central area of targets, giving an initial positioning of the targets on the image,

- a precise positioning step (step 21) of the targets taking account of deformations due to perspective,
- a target identification step (step 22) with identification of coding rings and their sectors, evaluation of the colours of the coding rings and management of hidden targets.

**7.** Process according to claim 6, in which the detection step (step 20) includes the following operations in sequence:

- use of an arresting filter, for example such as a Sobel filter or a Cany-Deriche filter, to calculate the gradients in X and in Y, (steps 30 and 31),
- calculate the normal to the gradient and its direction (step 32),
- calculate intersection and direction images (step 33),
- extraction of circles and ellipses (step 34),
- filtering by thresholding (step 35),
- labelling (step 36),
- filtering by regions (step 37).

**8.** Process according to claim 6, in which the identification step (step 22) includes the following operations for each target:

- Adaptive segmentation (step 50),
- Estimate of circle / ellipse deformations (step 51),
- Regular sampling of rings (step 52),
- Extraction of colour lists (step 53),
- Filtering of lists (step 54),
- Target identification (step 55).

**9.** Process according to claim 8, in which the identification step (step 22) also includes management of hidden targets.

**10.** Use of targets according to claim 1 in the industrial metrology field.

**11.** Use of targets according to claim 1 in the computer display field.

**Patentansprüche**

**1.** Codiertes Zielelement, benutzt in der Photogrammetrie, das kreisförmig ist und wenigstens zwei konzentrische Codierringe (10, 11) mit wenigstens zwei gleichen Winkelsektoren umfasst, angeordnet um eine Zentralzone (12) herum, die eine zentrale Scheibe (13) von homogener Farbe enthält, umgeben von einem Ring von komplementärer Farbe (14), seinerseits selbst umgeben von einem Ring (15) mit derselben Farbe wie die zentrale Scheibe (13), **dadurch gekennzeichnet, dass** alle Sektoren des ersten Codierrings (10), der der innere ist, dieselbe Farbe haben, außer einem, der eine komplementäre Farbe hat.

**2.** Zielelement nach Anspruch 1, bei dem die zentrale Scheibe (13) von weißer oder schwarzer Farbe ist.

**3.** Zielelement nach Anspruch 1, bei dem der zweite Ring (15), der den die zentrale Scheibe (13) umgebenden ersten Ring (14) umgibt, dünner ist als der erste Ring (14).

**4.** Zielelement nach Anspruch 1, bei dem jeder Sektor jedes Rings von homogener Farbe ist.

**5.** Zielelement nach Anspruch 1, das einen dritten Codierring (18) mit Sektoren umfasst, deren Farbe komplementär ist zu derjenigen des dem zweiten Codierring (11) benachbarten Sektors.

**6.** Photogrammetrieverfahren bei dem spezifische codierte Zielelemente nach einem der vorangehenden Ansprüche und eine Erkennungssoftware dieser Zielelemente in Bildern benutzt werden, **dadurch gekennzeichnet, dass** es die folgenden Schritte umfasst:

- einen Schritt (Schritt 20) zur Detektion der Zentralzone der Zielelemente, der eine erste Ortung der Zielelemente in dem Bild liefert,
- einen Schritt (Schritt 21) zur Feinortung der Zielelemente unter Berücksichtigung der perspektivisch bedingten Deformationen,

- einen Schritt (Schritt 22) zur Identifizierung des Zielelements mit Identifizierung der Codierringe und ihrer Sektoren, Bewertung der Farben der Codierringe und Verwaltung der Verdeckungen.

**7.** Verfahren nach Anspruch 6, bei dem der Detektionsschritt (Schritt 20) sukzessive umfasst:

- Anwendung eines Differentialfilters wie zum Beispiel eines Sobel- oder Carry-Deriche-Filters zur Berechnung der X- und Y-Gradienten (Schritte 30 und 31),
- Berechnung der Norm des Gradienten und der Richtung von diesem (Schritt 32),
- Berechnung der Überschneidungs- und Richtungsbilder (Schritt 33),
- Extraktion der Kreise und der Ellipsen (Schritt 34),
- Filterung durch Schwellenmethode bzw. Schwellenwertvergleich (Schritt 35),
- Etikettierung (Schritt 36),
- bereichsweise Filterung (Schritt 37).

**8.** Verfahren nach Anspruch 6, bei dem der Identifizierungsschritt (Schritt 22) für jedes Zielelement umfasst:

- adaptive Segmentierung (Schritt 50),
- Bewertung der Kreis/Ellipse-Deformationen (Schritt 51),
- regelmäßige Abtastung der Kränze (Schritt 52),
- Extraktion der Farbenlisten (Schritt 53),
- Filterung der Listen (Schritt 54),
- Identifizierung des Zielelements (Schritt 55).

**9.** Verfahren nach Anspruch 8, bei dem der Identifizierungsschritt (Schritt 22) außerdem eine Verwaltung der Verdeckungen umfasst (Schritt 56).

**10.** Verwendung der Zielelemente nach einem der Ansprüche 1 bis 5 auf dem Gebiet der industriellen Metrologie.

**11.** Verwendung der Zielelemente nach einem der Ansprüche 1 bis 5 auf dem Gebiet des Computersehens.

FIG. 1

FIG. 2

FIG. 3

FIG. 4

FIG. 5

FIG. 6

CALCUL DU GRADIENT EN X
FILTRE DE SOBEL

30

CALCUL DU GRADIENT EN Y
FILTRE DE SOBEL

31

CALCUL DE LA NORME DE GRAD.
CALCUL DE LA DIRECTION DU GRAD.

32

CALCUL DES IMAGES D'INTERSECTION
ET DE DIRECTION

33

EXTRACTION DES CERCLES
ET DES ELLIPSES

34

FILTRAGE PAR SEUILLAGE

35

ETIQUETAGE

36

FILTRAGE PAR REGIONS

37

FIG. 7

FIG. 8

FIG. 9

FIG. 10

FIG. 11A

FIG. 11B

FIG. 12

FIG. 13

# FIG. 14A

# FIG. 14B

FIG. 15

FIG. 16

POUR CHAQUE CIBLE :

SEGMENTATION ADAPTATIVE — 50

51 — ESTIMATION DES DEFORMATIONS CERCLES/ ELLIPSES

Couronne noire Introuvable ?

52 — ECHANTILLONNAGE REGULIER DES COURONNES

Echantillonnage Impossible ?

EXTRACTION DES LISTES DE COULEUR — 53

FILTRAGES DES LISTES — 54

55 — IDENTIFICATION DE LA CIBLE

Secteurs Introuvables ?

Cible identifiee

Faux candidat

GESTION DES OCCULTATIONS (OPTIONNEL)

REJET DE LA CIBLE

56

# FIG. 17

# EP 1 554 541 B1

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 5911767 A
- WO 9731336 A
- US 5554841 A

**Littérature non-brevet citée dans la description**

- **AHN S.J. ; SCHULTES M.** A new circular coded target for the automation of photogrammetric 3D-surface measurements. *Optical 3-D Measurement Techniques IV : Applications in architecture, quality control, robotics, navigation, medical imaging and animation,* 1997, 225-234
- **GANCI GIUSEPPE ; HANDLEY HARRY.** Automation in videogrammetry. *International Archives of Photogrammetry and Remote Sensing,* 1998, vol. 32 (5), 53-58
- **KNYAZ VLADIMIR A. ; SIBIYAKOV ALEXANDER.** Non Contact 3D Model Reconstruction Using Coded Target. *8th International Conference on Computer Graphics and Visualization,* 1998